# EUROPÄISCHE PATENTSCHRIFT

(11) **EP 1 701 287 B1**
(45) Veröffentlichungstag und Bekanntmachung des Hinweises auf die Patenterteilung: **09.02.2011**
(21) Anmeldenummer: 05405223.8
(22) Anmeldetag: 07.03.2005
(51) Int. Cl.: G06K 7/00, G06K 19/07, B61L 25/00, B61L 3/00, H04B 3/60, H01Q 1/36, H04B 7/04, G01S 3/72, G06K 7/10, G06K 7/08

(54) **Identifikationssystem und Verfahren zur Ermittlung von Bewegungsinformationen**
Identification system and method for determining movement informations
Système d'identification et procédé de détection d'informations de mouvement

(43) Veröffentlichungstag der Anmeldung: 13.09.2006
(73) Patentinhaber: Schweizerische Bundesbahnen SBB, 3000 Bern 65 (CH)
(72) Erfinder: Baiker, Stefan, 4059 Basel (CH); Rühl, Martin, 4102 Binningen (CH)
(74) Vertreter: Rutz, Peter

(56) Entgegenhaltungen:
- WO-A-99/11497
- US-A- 5 084 699
- US-A- 5 129 605
- US-A- 5 333 820
- US-A1- 2004 246 104
- US-B1- 6 366 260

## Beschreibung

Die Erfindung betrifft ein Identifikationssystem nach dem Oberbegriff des Patentanspruchs 1 und ein Verfahren zur Ermittlung von Bewegungsinformationen mit diesem Identifikationssystem nach Anspruch 7.

Wie in [1], Klaus Finkenzeller, RFID-Handbuch, 3. Auflage, Carl Hanser Verlag, München 2002, Seite 1, beschrieben, haben automatische Identifikationsverfahren (Auto-ID) in vielen Dienstleistungsbereichen, wie in der Beschaffungs- und Distributionslogik, im Handel, in Produktionsbetrieben, insbesondere in Materialflusssystemen, in den letzten Jahren grosse Verbreitung gefunden (siehe z.B. [2], PHILIPS, TAGSYS, Texas Instruments Inc., White Paper, ITEM-LEVEL VISIBILITY IN THE PHARMACEUTICAL SUPPLY CHAIN, White Paper, Juli 2004).

Von grosser Bedeutung unter den automatischen Identifikationssystemen sind Transpondersysteme, bei denen ein Transponder an den zu identifizierenden Objekten angebracht wird und mittels eines Lesegeräts und unter Verwendung magnetischer oder elektromagnetischer Felder abgefragt wird. Da bei diesen Systemen normalerweise Radiowellen angewendet werden, werden sie auch als RFID-Systeme bezeichnet. Bei entsprechend ausgestalteten RFID-Systemen ist es auch möglich, vom Lesegerät abgegebene Daten im Transponder zu speichern.

Das Lesegerät beinhaltet typischerweise ein Hochfrequenzmodul (Sender und Empfänger), eine Steuereinheit, ein Koppelelement und normalerweise eine Schnittstelle, die es erlaubt, Daten mit einem Rechner, beispielsweise einem Zentralrechner eines Verkehrsleitsystems oder einem dezentralen Personalcomputer, auszutauschen.

Der Transponder, der als Träger der Identifikationsdaten und gegebenenfalls weiterer Daten dient, besteht normalerweise aus einem Mikrochip und einem Koppelelement bzw. einer Antenne. Beispielsweise können in einem an einen Container angebrachten Transponder die Identifikationsdaten des Containers sowie Daten über die im Container gelagerte Fracht und gegebenenfalls Daten betreffend den Zustand dieser Fracht gespeichert sein (siehe z.B. [3], EP 1 408 207 A1).

Ausserhalb des Ansprechbereichs des Lesegeräts verhält sich der Transponder, der in der Regel keine Spannungsversorgung besitzt, vollkommen passiv. Erst innerhalb des Ansprechbereichs eines Lesegeräts wird der Transponder aktiv. Die zum Betrieb des Transponders benötigte Energie wird ebenso wie der Takt und die Daten drahtlos zum Transponder übertragen.

Wie in [1]; Seiten 22-23 weiter beschrieben ist, sind die wichtigsten Unterscheidungskriterien für RFID-Systeme die Betriebsfrequenz des Lese- bzw. des Lese- und Schreibgerätes (Transceiver), das physikalische Kopplungsverfahren und die Reichweite.

RFID-Systeme mit sehr kleinen Reichweiten von typischerweise 1 cm, die als "Close-coupling-Systeme" bezeichnet werden, arbeiten mit elektrischen und magnetischen Feldern und Frequenzen normalerweise bis 30 MHz.

RFID-Systeme mit Schreib- und Lesereichweiten bis zu etwa 1 m werden dem Begriff "Remote-coupling-Systeme" untergeordnet, die fast ausschliesslich eine induktive (magnetische) Kopplung von Lesegerät und Transponder und Frequenzen typischerweise in den Bereichen von 135 kHz, 13,56 MHz oder 27,125 MHz verwenden.

RFID-Systeme mit Reichweiten über 1 m und Arbeitsfrequenzen im UHF- und Mikrowellenbereich werden in [1] als "Long-range-Systeme" bezeichnet.

Aufgrund der verschiedenen Eigenschaften der einzelnen Systeme resultieren verschiedene Einsatzgebiete. Die spezifische Absorptionsrate (Dämpfung) bei 100 kHz ist für Wasser oder nicht-leitende Stoffe etwa um den Faktor 100 000 niedriger als bei 1 GHz. Niederfrequente Systeme werden daher hauptsächlich wegen der besseren Durchdringung von Objekten benutzt. In verkehrstechnischen Systemen ist dies von Bedeutung, da bei Transpondergehäusen oft metallhaltige Verschmutzungen oder Abdeckungen durch Schnee auftreten können. Bei elektromagnetischen Systemen ist hingegen das Auftreten elektromagnetischer Störungen zu beachten. Bei der Identifikation von Fahrzeugen wird die benötigte Reichweite des RFID-Systems so ausgelegt, dass bei maximaler Fahrzeuggeschwindigkeit die Aufenthaltsdauer im Ansprechbereich zur Übertragung der vorgesehenen Daten ausreichend ist.

Insbesondere in der Eisenbahntechnik, jedoch auch in weiteren Bereichen der Verkehrstechnik sowie der Sicherheitstechnik ist es nun wünschenswert, dass nicht nur Identifikationsdaten, sondern auch Daten bezüglich der Bewegung des Trägers eines Transponders, d.h. eines Eisenbahnwagens ermittelt werden können.

In [4], EP 1 017 577 B1 (vgl. WO 99/11497) ist ein Schienenfahrzeugdetektor beschrieben, bei dem die Richtung und die Geschwindigkeit eines Rads eines Eisenbahnwagens mittels zwei Radsensorelementen gemessen wird, die in Fahrtrichtung voneinander beabstandet mit einer Schiene verbunden sind. Durch die durch das Rad bewirkte Feldänderung werden in den induktiven Radsensorelementen sequentiell Signale erzeugt, deren Auswertung die gewünschten Informationen liefert.

Die Ermittlung von Fahrtinformationen kann mit einem RFID-System in gleicher Weise anhand von zwei Empfangsstationen mit je einer Antenne oder einer Empfangsstation mit zwei Antennen ermittelt werden. Die sequentielle Kopplung eines an einem Eisenbahnwagen vorgesehenen Transponders mit beiden Antennen ergibt wiederum Signale, anhand derer die benötigten Fahrtinformationen ermittelt werden können. Aufgrund der Verwendung von zwei Antennen, gegebenenfalls zwei Empfangsstationen gestalten sich die Herstellung und die Installation dieses RFID-Systems jedoch relativ aufwendig.

Ein den "Long-range-Systemen" zuzuordnendes RFID-System, mittels dessen Fahrtinformationen ermittelt werden können, ist aus [5], US 6'046'683 bekannt. Bei diesem System sendet ein Interrogator bzw. eine Abfrageeinheit Signale zu wenigstens einem Transponder oder ID-Tag aus, der ein moduliertes Antwortsignal (Backscatter signal) reflektiert. Der Interrogator vermittelt anschliessend die aufgrund des Doppler-Effekts entstandene Frequenzverschiebung des empfangenen Signals und die entsprechende Geschwindigkeit des Interrogators relativ zum Transponder. Durch mehrere Messungen kann die Position des Transponders und auch die Bewegungsrichtung des Interrogators ermittelt werden. Auch die Realisierung dieses Systems ist mit erheblichem Aufwand verbunden und nur beschränkt für bestimmte Anwendungen möglich.

[6], US 5,129,605 beschreibt ein Zug-Positions-Informationssystem, bei dem zunächst über einen GPS Empfänger im Zug die Position, Richtung, Geschwindigkeit und Beschleunigung bestimmt werden. Diese Informationen werden per Funk an eine Basisstation gesendet. Dieses System ist daher relativ aufwendig gestaltet und arbeitet nicht autonom. In den Bereichen, in denen der Empfang von GPS- Signalen nicht gesichert ist, wie in einem Eisenbahntunnel, ist dieses System daher nichts einsetzbar. Dieses Dokument offenbart die Merkmale des Oberbegriffs der unabhängigen Ansprüche.

[7], US 6,366,260 beschreibt RFID-Antennen mit verschiedenen geometrischen Formen, deren Innenraum freigelassen ist, wodurch sich Antennen mit einer größeren "elektrischen Länge" auf gleicher Fläche bilden lassen. Die Ermittlung von Bewegungsinformationen wird mit den in [8] offenbarten Vorrichtung hingegen nicht angestrebt.

Der vorliegenden Erfindung liegt nun die Aufgabe zugrunde, ein verbessertes Identifikationssystem mit einer stationären und einer mobilen Übertragungseinheit zu schaffen, welches die Ermittlung von Bewegungsinformationen der mobilen Übertragungseinheit erlaubt.

Insbesondere ist ein kostengünstig aufgebautes und einfach zu installierendes Identifikationssystem zu schaffen, welches erlaubt, die Bewegungsrichtung und/oder die Bewegungsgeschwindigkeit und/oder die Beschleunigung der mobilen Übertragungseinheit zu ermitteln.

Diese Aufgabe wird mit einem Identifikationssystem und einem für die Anwendung in diesem Identifikationssystem vorgesehenen Verfahren gelöst, welche die in Anspruch 1 bzw. 7 angegebenen Merkmale aufweist. Vorteilhafte Ausgestaltungen der Erfindung sind in weiteren Ansprüchen angegeben.

Das Identifikationssystem weist wenigstens eine stationäre und wenigstens eine mobile Übertragungseinheit auf, die je mit einer Antenne versehen sind, welche während der Übertragung von Daten miteinander gekoppelt sind.

Das Identifikationssystem ist ein RFID-System mit Schreib- und Lesereichweiten von wenigen Metern, das Signale vorzugsweise mittels induktiver oder kapazitiver Kopplung überträgt.

Erfindungsgemäss ist wenigstens eine der Antennen derart ausgestaltet, dass bei der gegenseitigen Verschiebung der miteinander gekoppelten Antennen eine richtungsabhängige Modulation (Amplitudenmodulation) der übertragenen Signale erfolgt. Ferner ist in wenigstens einer der Übertragungseinheiten eine gegebenenfalls mit einem Prozessor versehene Demodulationseinheit vorgesehen, mittels der die richtungsabhängig modulierten Signale demodulierbar und die Bewegungsrichtung und/oder die Bewegungsgeschwindigkeit und/oder die Beschleunigung bestimmbar sind.

Der Begriff Übertragungseinheit umfasst Vorrichtungen, wie Transponder oder Schreib-/Leseeinheiten, die Sende- und/oder Empfangseinheiten aufweisen, die mit einem der Datenverarbeitung dienenden Prozessor verbunden sind, der seinerseits mit Datenverarbeitungseinheiten verbunden sein kann, die beispielsweise der Steuerung von Anlagen und/oder Fahrzeugen dienen. Sofern die Verwendung oder die entsprechende Anordnung einer der Richtungsmodulation dienenden Antenne bzw. einer Modulationsantenne möglich ist, ist das erfindungsgemässe Identifikationssystem in allen Bereichen vorteilhaft anwendbar, in denen RFID-Systeme eingesetzt werden. Beispielsweise ist das erfindungsgemässe Identifikationssystem in einem Beförderungssystem, einem Verkehrsmittel und/oder einem Frachtfördersystem oder in einem Materialflusssystem oder in einem der Personenüberwachung dienenden System bzw. einer entsprechenden Anlage einsetzbar.

In diesen Systemen und Anlagen ist es oft von grundlegender Bedeutung, ob ein Verkehrsmittel, beispielsweise eine Eisenbahn in die eine oder andere Richtung fährt oder ob eine Person in einem Warenhaus oder an einem Flughafen durch ein Tor bzw. eine Schleuse in einen Raum hinein oder durch das Tor aus dem Raum hinaus geht. Dasselbe gilt für Transportgut, das in vorgesehene Richtungen fliessen soll. Möglich ist natürlich auch, dass Eintrittsberechtigung oder Austrittsberechtigungen, individuell für bestimmte Personen oder Material, dynamisch geändert werden, was mit dem erfindungsgemässen Identifikationssystem leicht realisierbar ist. Denkbar ist, dass Identifikationssysteme als zusätzliche Sicherheitskette eingesetzt werden oder gegebenenfalls bestehende Sicherheitssysteme ersetzen.

Für die Eisenbahntechnik ist das erfindungsgemässe Identifikationssystem von besonderer Bedeutung. Dort ist die Bewegungsinformation nicht nur für die zentrale Verkehrssteuerung, sondern auch für das Schienenfahrzeug von besonderer Bedeutung. Sofern sich beispielsweise ein Wagen von einer Zugskomposition löst und zurück rollt, soll dies spätestens dann erkennbar sein, wenn ein Gleisabschnitt in unzulässiger Richtung durchfahren wird. Auch von grosser Bedeutung kann die Rückmeldung der Fahrzeuggeschwindigkeit sein, um im Bedarfsfall geeignete Massnahmen zu treffen, wie Signale zu schalten, Temporeduktionen einzuleiten, Alarme auszulösen oder auch nur die Bewegungen zu registrieren. Sofern die Beschleunigung gemessen wird, kann das korrekte Verhalten von Fahrzeugen in sicherheitsrelevanten Zonen, beispielsweise in Verkehrsknotenpunkten überwacht werden.

Im Strassenverkehr sind zahlreiche weitere Anwendungsmöglichkeiten gegeben. Beispielsweise ist auch dort oft festzustellen, ob ein Fahrzeug einen Strassenabschnitt, beispielsweise eine Autobahnzufahrt oder eine Parkhauseinfahrt, in der falschen Richtung befährt. Ferner existieren in verschiedenen Städten Europas Gebührensysteme mit Kontrollabschnitten, an denen Fahrzeuge automatisch identifiziert und mit Gebühren belastet werden. Auch bei solchen Systemen kann die erfindungsgemässe Erfassung der Fahrtrichtung zu einer Vereinfachung der Kontrollsysteme führen.

Zusätzlich kann es natürlich auch hier ausserordentlich vorteilhaft sein, wenn mit demselben System auch noch die Fahrgeschwindigkeit oder gar die Beschleunigung gemessen werden kann. Sofern beispielsweise bei der Gebührenkontrollvorrichtung eine Geschwindigkeitsbegrenzung vorgegeben ist, kann eine Überschreitung derselben zusammen mit der Identität des betreffenden Fahrzeugs erfasst werden.

Mit dem erfindungsgemässen Identifikationssystem gelingt es daher in einfacher Weise, die Identifikationsfunktionen zu erfüllen und zusätzlich Informationen bezüglich der Bewegung der mobilen Übertragungseineinheit zu gewinnen. Besonders vorteilhaft ist dabei, dass die Bewegungsinformationen nach der Kommunikation von nur zwei Übertragungseineinheiten gewonnen werden können.

Das Identifikationssystem kann daher einfach und kostengünstig aufgebaut und mit geringem Aufwand montiert werden. Anstelle von beispielsweise zwei stationären Übertragungseinheiten kann nur eine stationäre Übertragungseinheit verwendet werden, deren Antenne typischerweise etwas grössere Abmessungen aufweisen wird, als Standardantennen.

Die der Richtungsmodulation dienende Antenne kann ferner auf der Seite der mobilen Übertragungseinheit vorgesehen sein. Ferner sind die stationäre und/oder die mobile Übertragungseinheit, wie in der EP 04 405 780.0 beschrieben, mit Kopplungsvorrichtungen koppelbar, die es erlauben, die Übertragungsvorrichtungen über grössere Entfernungen miteinander zu verbinden bzw. grössere Ansprechbereiche und somit längere Kontaktzeiten zu erzielen.

Beispielsweise kann ein an der Unterseite eines Eisenbahnwagens montierter Transponder, direkt oder über die Kopplungsvorrichtung, mittels Sende- und Empfangsgeräten, so genannten Balisen, abgefragt werden, die zwischen den Eisenbahnschienen im Gleis montiert sind.

Alternativ können die an der Unterseite von Eisenbahnwagen montierten Transponder, über die entsprechend installierte Kopplungsvorrichtung, mittels eines portablen Lese- und/oder Schreibgeräts, bequem an Positionen ausgelesen oder beschrieben werden, die für das Dienstpersonal bequem zugänglich sind.

Die als Antennen dienenden Kopplungselemente der Kopplungsvorrichtungsvorrichtung können daher besonders einfach als Modulationsantennen ausgestaltet und mit beliebigen Übertragungseinheiten, wie Transpondern, verwendet werden.

Bezüglich der Ausgestaltung und/oder Montage der Modulationsantennen bestehen hohe gestalterische Freiheiten, da die erforderliche Übertragungsqualität problemlos gewährleistet werden kann. Wichtig ist lediglich, dass für jede Richtung eindeutige Modulationsmuster oder Signaturen erzielt werden. Möglich ist die Verwendung einfacher Chirp-Muster, d.h. Signalmuster mit ansteigenden oder abfallenden Amplituden. Besonders vorteilhaft ist die Verwendung von Blockmustern, bei denen sich Blöcke mit unterschiedlicher Amplitude abwechseln.

Bei der Verwendung von Signalmustern mit lokalisierbaren Änderungen können diese der Geometrie der Antenne zugeordnet werden. Dadurch kann eine ermittelte Transferzeit der bekannten Länge eines Antennensegments und somit eines befahrenen Streckenabschnitt zugeordnet und daraus die Geschwindigkeit der mobilen Übertragungseinheit berechnet werden. Sofern mehrere Antennensegmente vorgesehen sind, lassen sich sequentiell mehrere Geschwindigkeiten und entsprechende Geschwindigkeitsänderungen oder Beschleunigungen ermitteln.

In einer ersten Ausgestaltung weist die der Richtungsmodulation dienende Modulationsantenne wenigstens eine Schleifenwindung auf, die eine Fläche oder einen Körper einschliesst, die bzw. der bezüglich der Verschieberichtung asymmetrisch ist. Beispielsweise kann die Fläche die Form eines Dreiecks oder eines Trapez aufweisen, das keine vertikal zur Fahrtrichtung verlaufende Symmetrieachse aufweist.

In einer zweiten Ausgestaltung weist die Modulationsantenne mehrere Schleifenwindungen auf, von denen eine oder mehrere Schleifenwindungen verschiedene Flächen oder Körper derart einschliessen, dass in Verschieberichtung nebeneinander liegende symmetrische oder asymmetrische Flächensegmente oder Körpersegmente definiert sind, die von Schleifenwindungen unterschiedlicher Anzahl umschlossen sind. Anhand dieser Modulationsantenne können Muster mit lokalisierbaren Musteränderungen erzeugt werden.

In einer dritten Ausgestaltung weist die Modulationsantenne innerhalb der Schleifenwindungen verschiedene Segmente mit Materialien auf, beispielsweise diamagnetische, paramagnetische oder ferromagnetische Stoffe, die deutlich unterschiedliche Permeabilitäten aufweisen. Beispielsweise kann in einem ersten Segment Luft, in einem zweiten Segment Kupfer und in einem dritten Segment Eisen vorgesehen sein. Im Bereich dieser Segmente resultieren wiederum stark unterschiedliche Flussdichten, weshalb die übertragenen Signale entsprechend moduliert werden.

In einer vierten Ausgestaltung wird die Modulationsantenne, beispielsweise eine Koppelspule, derart ausgerichtet, dass hinsichtlich des Kopplungsgrads bei der gegenseitigen Verschiebung der Antennen ein Gradient resultiert, entsprechend dem die übertragenen Signale moduliert werden.

Die Verfahrensschritte zur Ermittlung der Bewegungsrichtung und/oder der Bewegungsgeschwindigkeit und/oder der Beschleunigung sind leicht durchführbar. Zur Demodulation der modulierten Signale sind dem Fachmann bekannte Demodulationsvorrichtungen einsetzbar. Vorzugsweise wird ein Signalprozessor verwendet werden, der die ermittelten Muster der demodulierten Signale mit abgespeicherten Mustern vergleicht. Möglich ist die Verwendung einer Gleichrichterschaltung und einer Filterstufe, die ein Signal im Basisband bzw. die Envelope (Umhüllende) des demodulierten Signals liefern, die beispielsweise einer Schwellwertschaltung zugeführt wird, in der beispielsweise festgestellt wird, ob die erste oder die zweite Hälfte des Signals über einem Schwellwert liegt. Der Schwellwert wird vorzugsweise variabel in Abhängigkeit des Amplitudenverlaufs des modulierten Signals festgelegt.

Das Verfahren kann in der stationären oder in der mobilen oder in beiden Übertragungseinheiten durchgeführt werden. Es ist auch möglich, dass die Bewegungsinformationen nur in einer Übertragungseinheit ermittelt und anschliessend an die andere übertragen werden. An mobile Übertragungseinheiten werden oft der Stromversorgung dienende Signale übertragen, die deutlich höhere Amplituden aufweisen als die zur stationären Übertragungseinheit reflektierten oder zurück gesendeten Daten und die permanent übertragen werden, so dass die Bewegungsdaten einfacher und präziser in der mobilen Übertragungseinheit gewonnen werden können. Möglich ist natürlich auch, dass die mobile und/oder die stationäre Übertragungseinheit ein kontinuierliches Signal ausstrahlen, das empfangsseitig heraus gefiltert und ausgewertet wird. Weiterhin sind natürlich auch modulierte Antwortsignale, beispielsweise Sequenzen von modulierten Antwortsignalen entsprechend auswertbar.

Nachfolgend wird die Erfindung anhand von Zeichnungen näher erläutert. Dabei zeigt:
- Figur 1: in schematischer Darstellung ein in der Eisenbahntechnik verwendetes Identifikationssystem, das eine mobile Übertragungseinheit bzw. einen mit einer Lokomotive verbundenen Transponder 1 aufweist, der mittels einer Antenne 12 mit der in einem Gleisbett angeordneten Antenne 22 einer stationären Übertragungseinheit bzw. eines Sende- und Empfangsgeräts 2 verbunden ist, das über eine entsprechende Schnittstelle mit einem Rechner 3 verbunden ist;
- Figur 2: eine mit wenigstens einem Transponder 1 versehene Zugskomposition, die einen mit zwei stationären Übertragungseinheiten 2A, 2B bzw. Balisen versehenen Gleisabschnitt befährt;
- Figur 3: Pforten oder Schleusen in einem gesicherten Gebäude, die mit stationären Übertragungseinheiten 2X, 2Y, 2Z versehen sind;
- Figur 4: das in der EP 167 25 60 beschriebene Identifikationssystem mit einer der stationären oder der mobilen Übertragungseinheit 1, 2 zugehörigen Kopplungsvorrichtung 4, die ein erstes und ein zweites Kopplungselement 41, 43 aufweist, die durch ein drittes Kopplungselement 42 miteinander verbunden sind;
- Figur 5: ein erfindungsgemässes Identifikationssystem mit einer stationären Übertragungseinheit 2, die mit einer Modulationsantenne 22 versehen ist;
- Figur 6: ein erfindungsgemässes Identifikationssystem mit einer mobilen Übertragungseinheit 1 mit einer Modulationsantenne 12 und mit einer stationären Übertragungseinheit 2 mit einer Modulationsantenne 22, die mehrere Antennensegmente aufweist, welche durch entsprechende Führung der Leiterschlaufen der Antenne 22 gebildet sind;
- Figur 7: ein erfindungsgemässes Identifikationssystem mit einer mobilen Übertragungseinheit 1 und mit einer stationären Übertragungseinheit 2 mit einer Modulationsantenne 22, die mehrere Antennensegmente aufweist, welche durch Einlagerung von Materialsegmenten mit unterschiedlichen Permeabilitäten oder durch Einlagerung von Materialsegmenten gleicher Permeabilität mit unterschiedlichen Dichten gebildet sind;
- Figur 8: in einfachster Ausgestaltung eine als Modulationsantenne 12; 22; bzw. 43 dienende Schleifenantenne, die derart geneigt installiert ist, dass bei der Verschiebung der Antennensysteme ein Kopplungsgradient resultiert;
- Figur 9: das erfindungsgemäss erweiterte Identifikationssystem von Figur 4 mit einer der mobilen Übertragungseinheit 1 zugehörigen Kopplungsvorrichtung 4, deren zweites Kopplungselement 43 erfindungsgemäss eine Modulationsantenne bildet;
- Figur 10: das erfindungsgemäss erweiterte Identifikationssystem von Figur 4 mit einer der stationären Übertragungseinheit 2 zugehörigen Kopplungsvorrich- tung 4, deren zweites Kopplungselement 43 erfindungsgemäss eine Modulationsantenne bildet;
- Figur 11a: ein unmoduliertes Sendesignal;
- Figur 11b: das Signal von Figur 11a nach der Modulation mittels einer Modulationsantenne;
- Figur 11c: das demodulierte Signal von Figur 11b und die daraus gewonnene Information betreffend die Bewegungsrichtung;
- Figur 12a: ein unmoduliertes Sendesignal;
- Figur 12b: das Signal von Figur 12a nach der Modulation mittels einer segmentierten Modulationsantenne; und
- Figur 12c: das demodulierte Signal von Figur 12c und die daraus gewonnene Information betreffend die Bewegungsrichtung und die Bewegungsgeschwindigkeiten in verschiedenen Zeitabschnitten;
- Figur 13: eine Sequenz von noch nicht erfindungsgemäss modulierten Abfrageimpulsen ip und erfindungsgemäss modulierten Antwortimpulsen rp; und
- Figur 14: Momentaufnahmen zu Vorgängen in einem Signalprozessor während der Bearbeitung und Evaluierung der verarbeiteten Signale vor und nach der Demodulation und Auswertung.

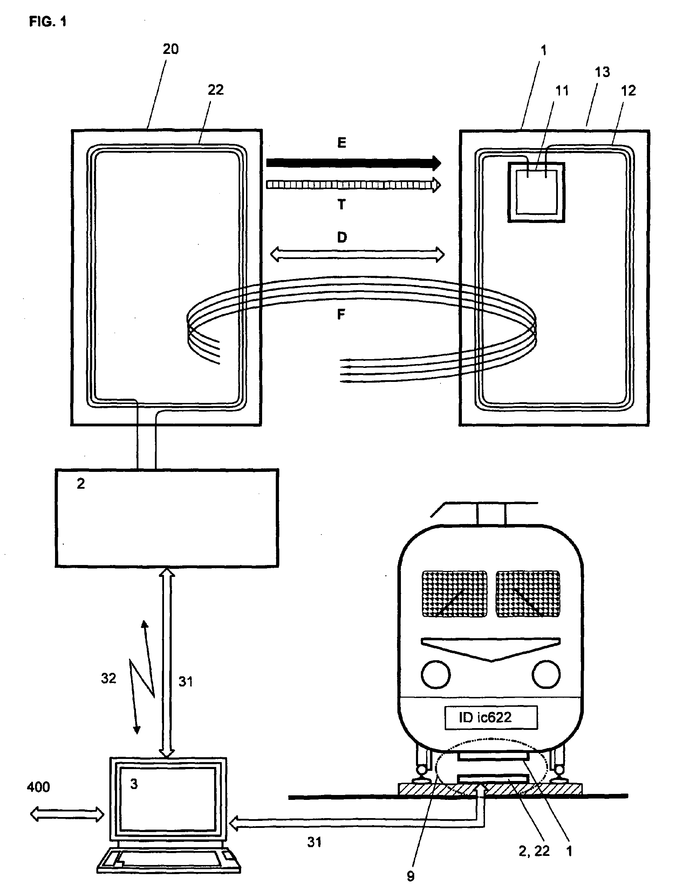

Figur 1 zeigt in schematischer Darstellung ein induktives Identifikationssystem, das eine mobile Übertragungseinheit bzw. einen Transponder 1 aufweist, der mittels einer ersten Antenne 12 mit der zweiten Antenne 22 einer stationären Übertragungseinheit bzw. eines Sende- und Empfangsgeräts 2 verbunden ist, die über eine entsprechende drahtgebundene oder drahtlose Schnittstelle 31, 32 mit einem Rechner 3 verbunden ist. Der Rechner 3 ist über eine Verbindung 400 beispielsweise mit einem Verkehrsleitrechner verbunden.

Der Transponder 1 weist einen auf einem Substrat 13 angeordneten Chip 11 bzw. eine elektronische Schaltung auf, die einen Prozessor, eine Speichereinheit sowie gegebenenfalls mit Modulations- und/oder Demodulationsmodulen versehene Sende- und Empfangseinheiten enthält, die mit einer als Antenne dienenden Koppelspule 12 verbunden sind. Das mit einem lokalen Rechner 3 oder weiter über eine Leitung 400 beispielsweise mit einem Verkehrsleitrechner verbundene Sende-und Empfangsgerät 2 weist einen plattenförmigen Träger 20 auf, auf dem eine als zweite Antenne dienende Koppelspule angeordnet ist. Vom Sende- und Empfangsgerät 2 wird eine der Stromversorgung dienende Wechselspannung E sowie ein Taktsignal T zum Transponder 1 übertragen, um diesen in den Betriebszustand zu versetzen, wonach Daten D zwischen dem Transponder 1 und dem Sende- und Empfangsgerät 2 ausgetauscht werden können. Zur induktiven Kopplung der beiden Antennen 12 und 22 sind diese so nahe gegeneinander geführt, dass sie von magnetischen Feldlinien F durchstossen werden.

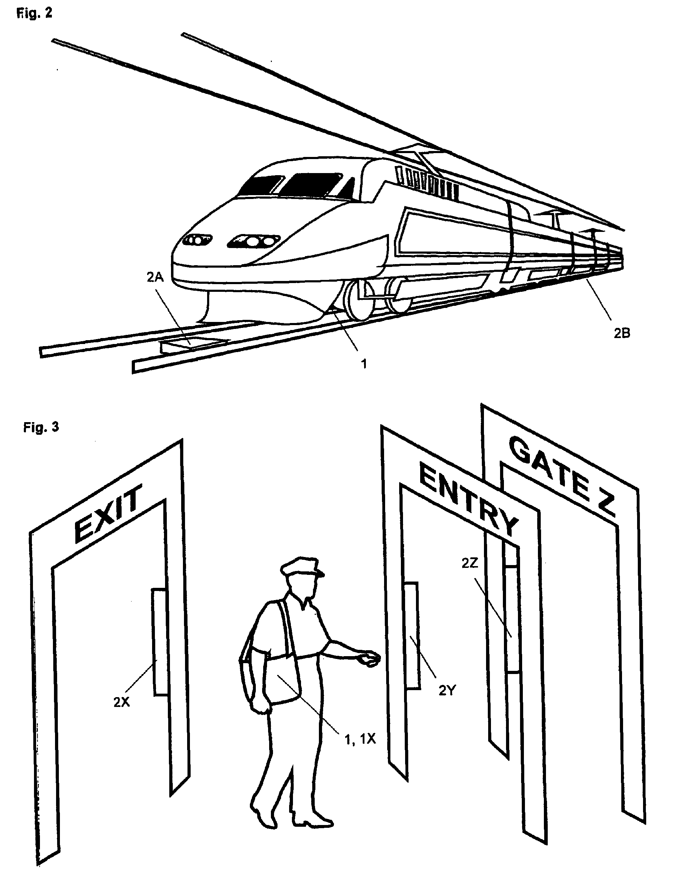

Figur 2 zeigt eine mit wenigstens einem Transponder 1 versehene Zugskomposition, die einen mit zwei stationären Übertragungseinheiten 2A, 2B bzw. Balisen versehenen Gleisabschnitt befährt. Sofern die beiden Übertragungseinheiten 2A, 2B der Kontrolle der Fahrtrichtung dienen, können sie durch ein erfindungsgemässes Identifikationssystem mit nur einer Übertragungseinheit 2 ersetzt werden.

Figur 3 zeigt Pforten oder Schleusen in einem gesicherten Gebäude, in einem Warenhaus, in einem Warenlager, in einem Zollgebäude oder einer Bank, die mit stationären Übertragungseinheiten 2X, 2Y, 2Z versehen sind. In einem gegebenenfalls dynamisch änderbaren Reglement kann festgelegt sein, dass Personen oder Waren nur durch den Eingang in das Gebäude eintreten und nur durch den Ausgang das Gebäude verlassen dürfen. Ferner kann für bestimmte Personen oder Waren individuell festgelegt sein, dass sie das Tor Z nur in einer Richtung durchqueren dürfen. Die stationären Übertragungseinheiten 2X, 2Y, 2Z treten jeweils in mit mobilen Übertragungseinheiten 1; 1X, beispielsweise einem persönlichen Transponder 1 einer Person oder mit Transpondern 1X, die an Waren vorgesehen sind, welche sich einem Tor nähern. Mit dem erfindungsgemässen Identifikationssystem ist es nun möglich, nicht nur die Person oder die Waren zu identifizieren, sondern auch die Richtung festzustellen, in der diese die Schleuse durchqueren. Anhand der ermittelten Daten können bekannte Massnahmen ergriffen werden, beispielsweise Meldungen oder Alarme abgegeben oder Schleusen gesperrt werden, sofern Personen oder Waren ein Tor unberechtigt durchqueren.

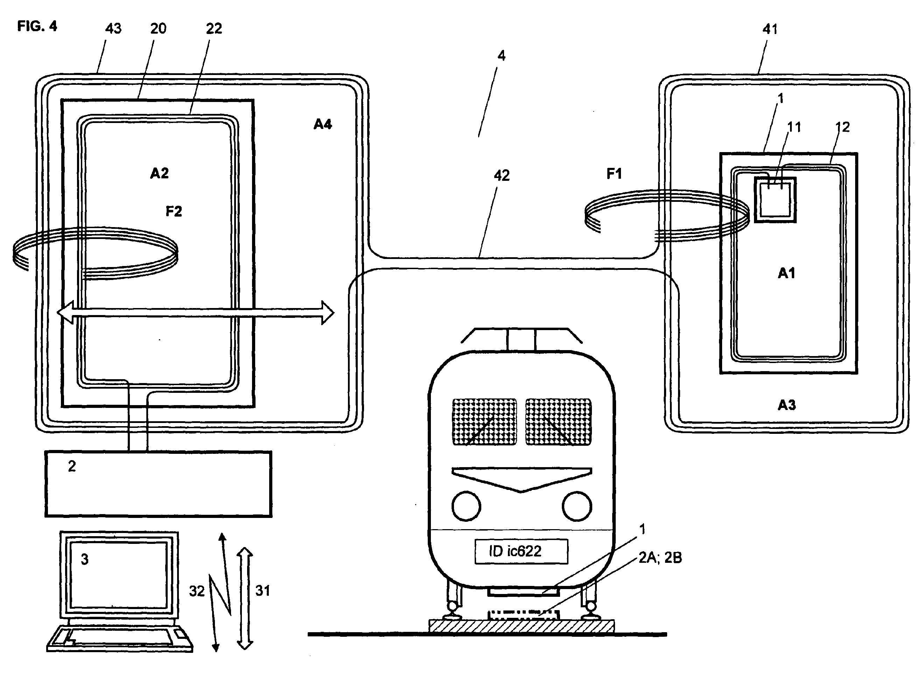

Figur 4 zeigt das Identifikationssystem von Figur 1, dessen übertragungsvorrichtungen 1, 2 mittels einer der stationären oder der mobilen Übertragungseinheit 1, 2 zugehörigen Kopplungsvorrichtung 4 miteinander gekoppelt sind. Die in der EP 1 672 560 A1 beschriebene Kopplungsvorrichtung 4, die ein erstes und ein zweites Kopplungselement 41, 43 aufweist, die durch ein drittes Kopplungselement 42, im vorliegenden Fall eine galvanische Verbindung miteinander verbunden sind, erfüllt verschiedene Funktionen. Einerseits können, insbesondere durch eine geeignete Wahl der Anzahl der Schleifenwindungen der Kopplungselemente 41, 43 und unter Berücksichtigung der normalerweise stark unterschiedlichen Sendeleistungen der beiden übertragungsvorrichtungen 1, 2, die Systemimpedanzen vorteilhaft aneinander angepasst werden oder soweit verstimmt werden, dass grössere Bandbreiten resultieren. Das erste Kopplungselement 41 kann fest mit der mobilen oder fest mit der stationären Übertragungseinheit 1; 2 gekoppelt sein, während das zweite Kopplungselement 43 als Antenne dient, die mit der Antenne 22, 21 der korrespondierenden stationären oder mobilen Übertragungseinheit 2 bzw. 1 in Kontakt treten kann. In der Eisenbahntechnik kann die Kopplungsvorrichtung 4 entweder an einem mit der mobilen Übertragungseinheit 1 bzw. dem Transponder 1 versehenen Eisenbahnwagen oder, verbunden mit der stationären Übertragungseinheit, zumindest teilweise im Gleisbett installiert sein. Die Geometrie des als Antenne dienenden zweiten Kopplungselements 43 ist beispielsweise derart gewählt, dass bei der gegenseitigen Passage der Übertragungseinheiten 1, 2 die gewünschten Kontaktzeiten resultieren. Das dritte Kopplungselement 42 ist derart gewählt, dass das erste und zweite Kopplungselement 41, 43 an gewünschten Positionen installiert werden können. Das zweite Kopplungselement 42, mittels dessen das erste und zweite Kopplungselement 41, 43 gekoppelt sind, ist vorzugsweise ein Koaxialkabel passender Länge, das beispielsweise anhand von Steckverbindern, mit den Koppelspulen 41, 43 verbunden ist. Eine Kopplung zwischen dem ersten und zweiten Kopplungselement 41, 43 kann vorteilhaft auch mittels einem oder mehreren induktiven dritten Kopplungselementen 42 vorgesehen sein, die zwischen dem ersten und zweiten Kopplungselement 41, 43 jeweils derart angeordnet sind, dass über die dritten Kopplungselemente 42 eine induktive Verkettung der ersten und zweiten Kopplungselemente 41, 43 resultiert.

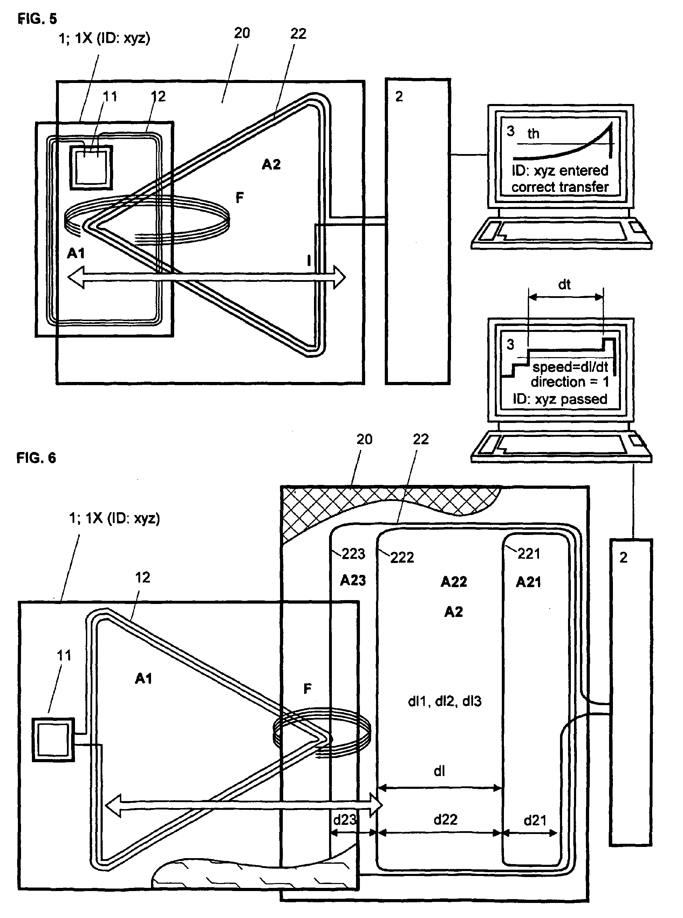

Figur 5 zeigt eine mobile Übertragungseinheit 1 bzw. einen Transponder 1 während der Passage einer stationären Übertragungseinheit 2, die mit einer der Richtungsmodulation der übertragenen Signale dienenden Modulationsantenne 22 versehen ist. Beispielsweise ist der Transponder 1 der persönliche Ausweis der in Figur 3 gezeigten Person oder ein Transponder 1X, der mit einem Transportgut verbunden ist, das von der genannten Person getragen wird.

Die Modulationsantenne 22 der stationären Übertragungseinheit 2 ist nun derart geformt, dass sich der Kopplungsgrad der Antennen 12, 22 während der Passage der mobilen Übertragungseinheit 1 und innerhalb des Kontaktbereichs der Übertragungseinheiten 1, 2 derart ändert, dass nach Demodulation ein Signalverlauf mit einem eindeutigen Muster, im einfachsten Fall ein Gradientenverlauf oder ein Stufenverlauf, resultiert. In Figur 5 weist die Modulationsantenne 22 die Form eines Dreiecks auf, das mit einer Ecke in eine Transportrichtung weist. Bei der Annäherung des Transponders 1 an die Modulationsantenne 22 entsteht zu Beginn eine relativ schwache Kopplung der Antennen 12, 22 die anschliessend stark ansteigt und dann rasch abfällt. Zur Bestimmung der Richtung ist es jedoch nicht wesentlich, welche Signalmuster bei einer bestimmten Modulationsantenne 22 für jede Transferrichtung resultieren. Wichtig ist lediglich, dass sich die entstehenden Signalmuster für jede Transferrichtung jeweils deutlich unterscheiden. Komplexe Muster werden vorzugsweise mit Signalprozessoren bearbeitet. Bei einfachen Mustern können hingegen einfache Schwellwertschaltungen oder Vergleichsschaltungen verwendet werden, mittels derer festgestellt wird, ob ein Signal ansteigt oder abfällt oder ob die Signalleistung im ersten oder zweiten Signalanteil grösser ist.

In Figur 5 zeugt das Terminal 3, dass der Transponder 1 mit der Identifikationsnummer xyz die stationäre Übertragungseinheit 2 in zulässiger Richtung passiert hat. Das vom Transponder 1 empfangene Signal wurde durch die Modulationsantenne 22 derart moduliert, dass die Amplitude des Signals im Verlauf der Kontaktzeit angestiegen ist und einen Schwellwert th überschritten hat. Der Schwellwert th wird vorzugsweise in Abhängigkeit der Intensität des empfangenen Signals gebildet und kann daher von Fall zu Fall ändern. Sofern jeweils etwa dieselben Signalintensitäten auftreten, kann auch ein konstanter Schwellwert th gewählt werden. Dies ist oft jedoch nicht der Fall, da die gegenseitige Lage der Antennen 12, 22 von Fall zu Fall wechseln kann, insbesondere dann, wenn Transponder 1 von Personen getragen werden. Für jeden Fall kann jedoch davon ausgegangen werden, dass die gegenseitige Lage der Antennen 12, 22 während der Kontaktzeit etwa gleich bleibt. Sofern dies nicht der Fall ist und die Lage der Antennen beispielsweise manipuliert wird, kann das resultierende Muster normalerweise nicht eindeutig einem abgespeicherten Richtungsmuster zugeordnet und ein Alarm ausgelöst oder der Sachverhalt registriert werden.

Zu beachten ist, dass die Signalauswertung nur für die Periode erfolgen soll, in der die Übertragungseinheiten 1, 2 in Kontakt standen. Vorzugsweise werden vor der Auswertung der übertragenen Signale Schranken gesetzt innerhalb derer die Signalauswertung erfolgt. Die Schranken werden beispielsweise auf die Zeitpunkte gesetzt, an denen die Kommunikationsverbindung zwischen den Übertragungseinheiten erstellt und wieder abgebrochen wurde. Für die Ermittlung des Schwellwerts kann innerhalb der Schranken beispielsweise ein Mittelwert der Amplituden ermittelt werden. Eine Schranke kann auch an die Stelle der maximalen Intensität gelegt werden, wonach ein einfach auswertbarer Gradient resultiert.

Die Richtungsmodulation, Richtungsdemodulation und die Auswertung der Signale bezüglich Bewegungsinformationen kann völlig unabhängig von den weiteren, dem Fachmann bekannten Kommunikationsvorgängen innerhalb des Identifikationssystems erfolgen. Zur optimalen Nutzung der eingesetzten Mittel erfolgt vorzugsweise eine sequentielle Bearbeitung der einzelnen Vorgänge. Beispielsweise können alle Identifikationsvorgänge erledigt werden, bevor die Signale bezüglich Bewegungsinformationen ausgewertet werden. Die Richtungsdemodulation und Abspeicherung der Signale erfolgt vorzugsweise jedoch parallel.

Gemäss obigen Feststellungen können Modulationsantennen für die erfindungsgemässen Identifikationssysteme unter Berücksichtigung der jeweiligen Gegebenheiten beliebig ausgestaltet werden. Besonders vorteilhaft ist die Verwendung von Modulationsantennen, bei denen durch Formung oder Führung der einzelnen Leiterschleifen oder Leiterschleifenpakete Antennensegmente gebildet werden, die signifikante Änderungen in den Signalmustern bewirken.

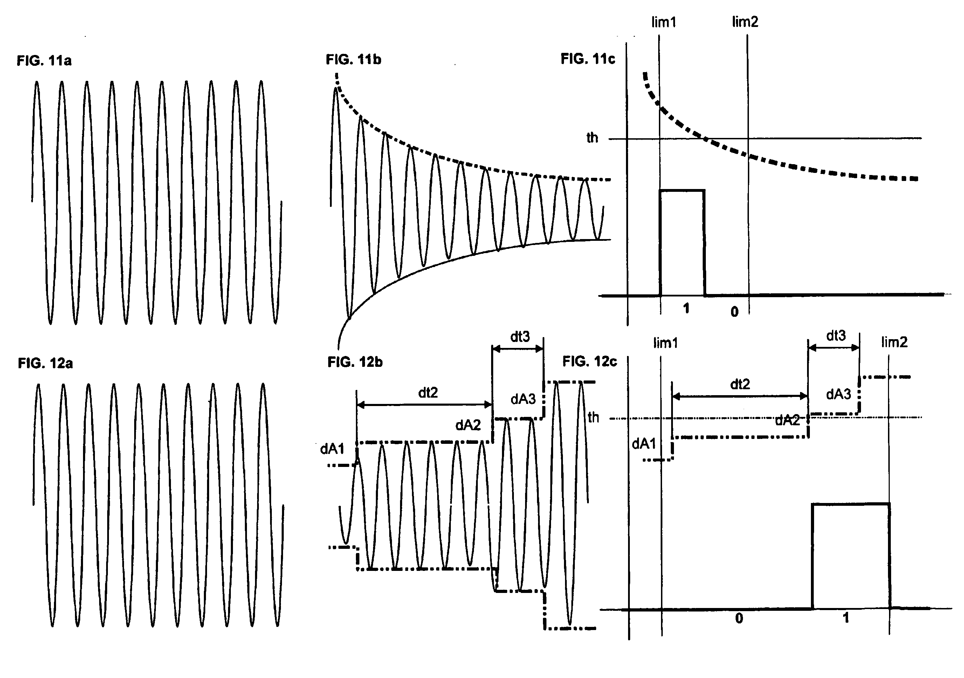

In Figur 6 ist eine mit der stationären Übertragungseinheit 2 verbundene Modulationsantenne 22 gezeigt, bei der erste Leiterschleifen 221 ein erstes Antennensegment, zweite Leiterschleifen 222 ein zweites Antennensegment und dritte Leiterschleifen 223 ein drittes Antennensegment definieren. Den drei Antennensegmenten sind dabei die Flächeninhalte A21, A22 und A23 zugeordnet, in denen unterschiedliche Flussdichten auftreten werden. Wie in Figur 6 weiter skizziert, wird das Signal stufenartig moduliert, so dass nach der Demodulation ein entsprechendes Signalmuster resultiert (siehe Figur 12c). Die Längen der entsprechenden Zeitintervalle dt1, dt2, ... im ermittelten Signalmuster korrespondieren zu den Abmessungen d12, d22, d23 der Antennensegmente. Das zweite Antennensegment, weist die grössten Abmessungen d22, d.h. den grössten parallel zur Fahrtrichtung verlaufenden Durchmesser auf, der vorteilhaft zur Berechnung der Bewegungsgeschwindigkeit verwendet werden kann, indem zusätzlich die Länge dt2 des zweiten Zeitintervalls ermittelt wird. Nebst der Bewegungsrichtung kann daher zusätzlich die Bewegungsgeschwindigkeit in einfacher Weise ermittelt werden. Durch Auswertung von mehreren Intervallen können die Geschwindigkeiten für mehrere Antennensegmente und somit Geschwindigkeitsänderungen bzw. Beschleunigungen ermittelt werden.

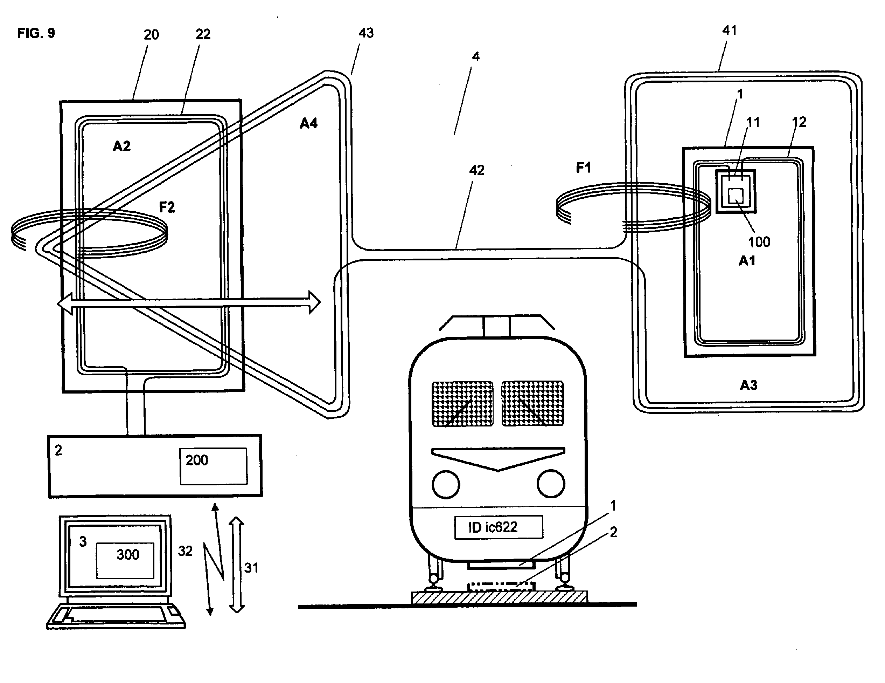

In Figur 6 ist ferner gezeigt, dass auch beide Übertragungseinheiten 1, 2 mit Modulationsantennen 12, 22 versehen sein können. In der Eisenbahntechnik werden vorzugsweise die mobilen Übertragungseinheiten 1 mit Modulationsantennen 12, 43 (siehe Figur 9) versehen, damit die stationären Übertragungseinheiten 2 mit minimalem Aufwand "punktuell" installiert werden können.

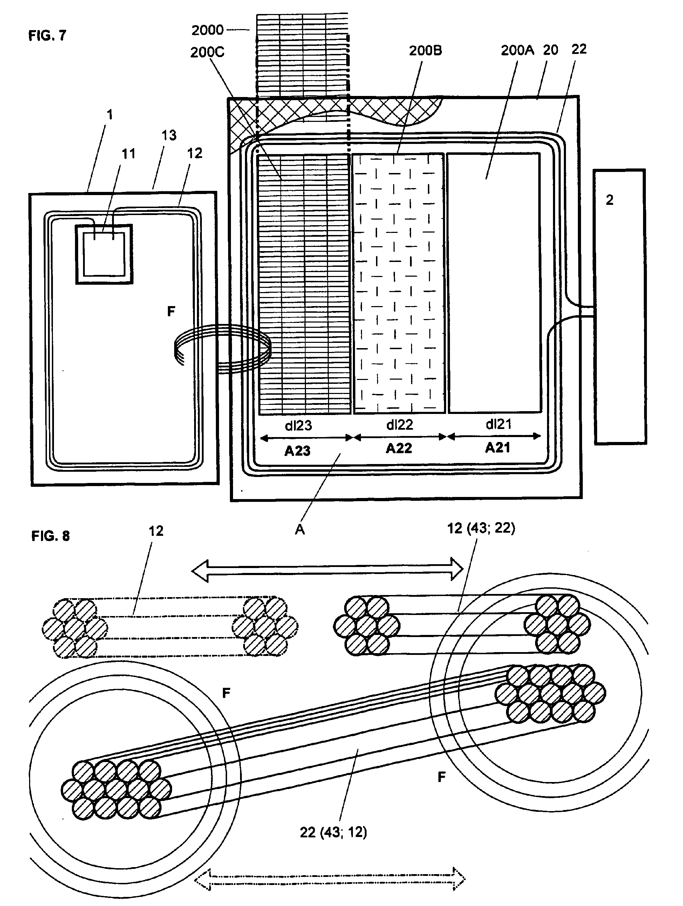

In Figur 7 ist eine mit der stationären Übertragungseinheit 2 verbundene Modulationsantenne 22 gezeigt, bei der die von den Leiterschleifen eingeschlossene Fläche A in drei Segmente A21, A22, A23 aufgeteilt ist, die in Fahrtrichtung den Durchmesser d121, d122, d123 aufweisen und in denen Materialsegmente 200A, 200B, 200C vorgesehen sind, die unterschiedliche Permeabilitätszahlen aufweisen. Beispielsweise kann in einem ersten Segment Luft, in einem zweiten Segment Kupfer und in einem dritten Segment Eisen vorgesehen sein. Die Modulationsantenne (12), 22 kann auch präzise benachbart an bekannten Teilen und Materialien montiert werden, welche als Materialsegment 200 dienen. Beispielsweise kann die Modulationsantenne 22 im Gleisbett derart über Metallschwellen 2000 montiert werden, dass für jede Fahrtrichtung ein eindeutiges Modulationsmuster resultiert. Beispielsweise ist zu Beginn der Antennenschleifen eine Metallschwelle 2000 und am Ende der Antennenschleifen keine Metallschwelle 2000 vorgesehen sein. Im Bereich dieser Segmente resultieren daher stark unterschiedliche Flussdichten, weshalb die übertragenen Signale entsprechend moduliert werden. Modulationsantennen dieser Art, die einen hohen Modulationsgrad aufweisen, können besonderes einfach und kostengünstig hergestellt werden.

Die Modulationsantenne (12), 22 kann auch präzise benachbart an bekannten Teilen und Materialien montiert werden, welche als Materialsegment 200 dienen. Beispielsweise kann die Modulationsantenne 22 im Gleisbett derart über Metallschwellen 2000 montiert werden, dass für jede Fahrtrichtung je ein eindeutiges Modulationsmuster resultiert. Beispielsweise ist zu Beginn der Antennenschleifen eine Metallschwelle 2000 und am Ende der Antennenschleifen keine Metallschwelle 2000 vorgesehen. Die Antenne kann innerhalb eines Gebäudes auch im Bereich von Betonelementen oder metallenen Türrahmen befestigt werden.

Möglich ist auch die Verwendung von Materialsegmenten bestehend aus Elementen gleicher Permeabilität, die mit unterschiedlichen Dichten in den Flächensegmenten angeordnet werden, weshalb in den Antennenelementen wiederum unterschiedliche Flussdichten und entsprechende Modulationsmuster resultieren.

Zu beachten ist, dass bei Modulationsantennen durch die Einlagerung von Materialsegmenten in allen Antennensegmenten bessere Kopplungen resultieren können als bei Antennen, die nicht der Richtungsmodulation dienen.

Figur 8 zeigt eine als Modulationsantenne dienende Schleifenantenne 12 einer stationären Übertragungseinheit 2, die geneigt zur Bewegungsrichtung der Antenne 12 einer mobilen Übertragungseinheit 1 montiert ist. Der Kopplungsgrad zwischen diesen Antennen 12, 22 ändert daher bei der der gegenseitigen Verschiebung, so dass auch hier eine Modulation der übertragenen Signale resultiert.

Figur 9 zeigt das erfindungsgemäss erweiterte Identifikationssystem von Figur 4 mit einer der mobilen Übertragungseinheit 1 zugehörigen Kopplungsvorrichtung 4, deren zweites Kopplungselement 43 erfindungsgemäss eine Modulationsantenne bildet. Bei der Überfahrt über eine "punktuelle" zweite Übertragungseinheit 2 erfolgt daher die Richtungsmodulation der übertragenen Signale durch die mobile Modulationsantenne 43, die beispielsweise an der Unterseite einer Lokomotive installiert ist. Die Auswertung der übertragenen Signale kann in der mobilen und/oder in der stationären Übertragungseinheit 1, 2 erfolgen. Besonders einfach und präzise können die Informationen in der mobilen Übertragungseinheit 1 gewonnen werden, da von der stationären Übertragungseinheit 2 Signale mit hoher Intensität übertragen werden. Besonders einfach ist die Verwendung des der Stromversorgung dienenden Signals, das im Transponder ohnehin gleichgerichtet wird. Das gleichgerichtete Signal kann beispielsweise über ein R-C Glied einem Signalprozessor oder einer Vergleichsschaltung zugeführt werden. Besonders vorteilhaft können die in der mobilen Übertragungseinheit präzise ermittelten Bewegungsinformationen noch innerhalb der Kontaktdauer an die stationäre Übertragungseinheit 2 gemeldet werden. Für diese Anwendung können beispielsweise Modulationsantennen vorgesehen werden, bei denen ein Modulationsteil von nicht der Modulation dienenden Antennenteilen eingeschlossen ist. Die oben genannten Schranken, die den auszuwertenden Signalanteil begrenzen, sind entsprechend enger zu setzen. Im Übertragungsprotokoll ist vorzusehen, dass nebst der Übertragung der Identifikationsdaten auch die Übertragung der Bewegungsinformationen vorzusehen ist.

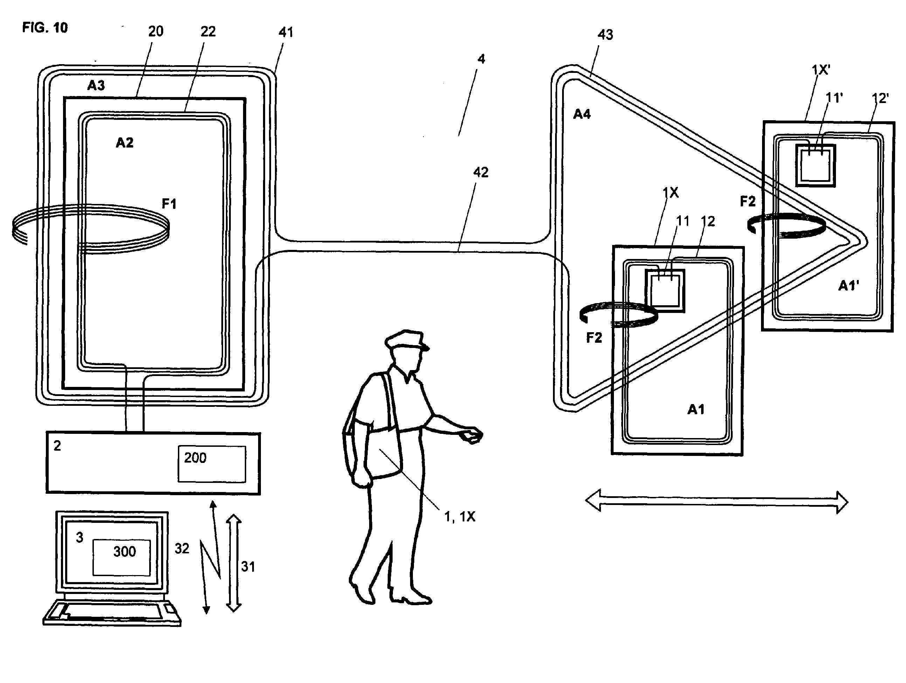

Figur 10 zeigt das erfindungsgemäss erweiterte Identifikationssystem von Figur 4 mit einer der stationären Übertragungseinheit 2 zugehörigen Kopplungsvorrichtung 4, deren zweites Kopplungselement 43 erfindungsgemäss eine Modulationsantenne bildet.

Figur 11a und Figur 12a zeigen ein Signal, beispielsweise ein der Energieversorgung dienendes Signal (siehe Figur 1, Signal E) vor der Modulation. Figur 11b und 11 zeigen das Signal nach der Modulation durch die Modulationsantenne 21 und/oder 22. Das Signal 11b wurde mit einer segmentierten Modulationsantenne moduliert, wie sie in Figur 6 gezeigt ist. Figur 11c und 12c zeigen die demodulierten und gefilterten Signale, die innerhalb von Schranken lim1, lim2 ausgewertet werden.

In Figur 11c ist ein Schwellwert th vorgesehen, der innnerhalb der Schranken lim1, lim2 mit dem demodulierten Signal verglichen wird, wodurch die gewünschte Richtungsinformation gewonnen wird.

In Figur 12c ist ebenfalls ein Schwellwert th anwendbar, der innerhalb der Schranken lim1, lim2 mit dem demodulierten Signal verglichen wird. In beiden Fällen kann jedoch auf einen Schwellwert th verzichtet werden, indem das ermittelte Signalmuster mit einem abgespeicherten Signalmuster verglichen wird, das beispielsweise bei Tests ermittelt wurde.

In 12c sind ferner die Längen der Intervalle dt eingezeichnet, die den Abmessungen d1 der entsprechenden Antennensegmente von Figur 6 entsprechen und die die Eisenbahn benötigte, um eine entsprechende Strecke zurückzulegen. Die Intervalle dt sind jeweils durch signifikante Amplitudenänderungen dA1, dA2, dA3 begrenzt.

Für die Modulation und Auswertung können alle zwischen den Übertragungseinheiten 1, 2 übertragenen Signale verwendet werden. Möglich ist ferner die Verwendung eines nur für diesen Zweck vorgesehenen Signals. Besonders vorteilhaft ist die Verwendung des der Energieversorgung dienenden Signals E (siehe Figur 1).

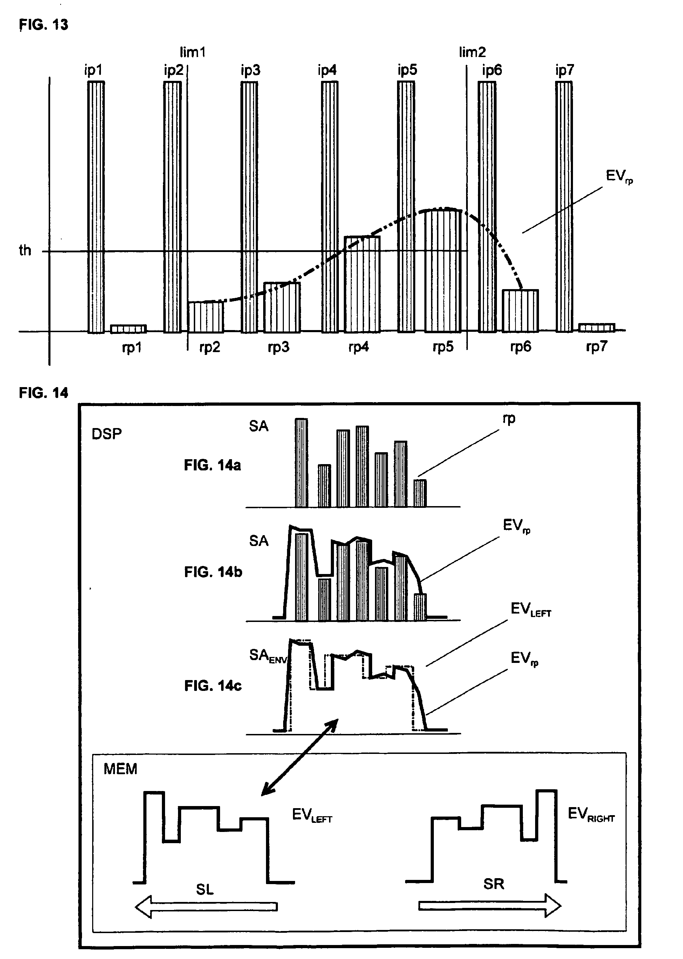

Figur 13 zeigt eine Sequenz von noch nicht erfindungsgemäss modulierten Abfrageimpulsen ip1, ip2, ... und erfindungsgemäss modulierten Antwortimpulsen rp1, rp2, ... , mit denen die Abfragen beantwortet wurden. Grundsätzlich möglich ist, dass beispielsweise ein Transponder 1 nach Erhalt eines Abfrageimpulses ip eine lange Sequenz von Antwortimpulsen rp11, rp12, ... sendet. Weiterhin ist möglich, dass mehrere mobile Transponder 1 (siehe Figur 10) Antwortsignale rp senden, die vorzugsweise nach Bildung eines Summensignals ausgewertet werden.

Figur 14 zeigt Momentaufnahmen zu Vorgängen in einem Signalprozessor DSP während der Bearbeitung und Evaluierung von Antwortimpulsen rp1, rp2, ... vor und nach der Demodulation und Auswertung. Figur 14a zeigt die modulierten Antwortimpulse rp. Figur 14b zeigt die modulierten Antwortimpulse rp und eine durch Demodulationsvorgänge gebildete Umhüllende EVᵣₚ. Figur 14c zeigt die Umhüllende EVᵣₚ bzw. ein Signalmuster oder eine Signatur, die bei der Durchfahrt in eine Richtung erzeugt wurde. Nach Ermittlung des Signalmusters gemäss Figur 14c erfolgt der Vergleich mit in einem Speicher MEM abgelegten Signalmustern EV_{LEFT}, EV_{RIGHT} , die mittels Testfahrten für jede Fahrtrichtung ermittelt wurden.

Das erfindungsgemässe Identifikationssystem wurde in bevorzugten Ausgestaltungen beschrieben und dargestellt. Anhand der erfindungsgemässen Lehre sind jedoch weitere fachmännische Ausgestaltungen realisierbar. Insbesondere kann der Fachmann ausgehend von der erfindungsgemässen Lehre die für die jeweilige Anwendung passende Modulationsantenne vorsehen. Ferner können beliebige Auswerteschaltungen verwendete werden, die auf analoger oder digitaler Schaltungstechnik basieren. Bei der Verwendung von Prozessoren, insbesondere Signalprozessoren, kann die Auswertung mittels Software erfolgen.

Das erfindungsgemässe Identifikationssystem ist nicht auf die Anwendung von induktiver oder magnetischer Signalübertragung begrenzt. Die Erfindung kann in gleicher Weise bei der Signalübertragung mittels elektrischer Felder, beispielsweise anhand kapazitiv arbeitender Antennen, angewendet werden. Bei kapazitiver Kopplung können beispielsweise kapazitiv gekoppelte Antennen vorgesehen sein, deren Abstand sich bei der gegenseitigen Verschiebung ändert. Im einfachsten Fall ist eine zur Fahrtrichtung schräg angeordnete Kondensatorplatte vorgesehen, über die hinweg eine parallel zur Fahrtrichtung angeordnete Kondensatorplatte geführt wird. Antennensegmente könnten auch bei diesen Antennen in einfacher Weise durch segmentweise Beschichtung mit unterschiedlichen Dielektrika erzielt und/oder entsprechender Wahl der Grössen der Antennensegmente erzielt werden.

Die in den Übertragungseinheiten 1, 2 benötigten Signalprozessoren und Demodulationsstufen 100, 200, 300 sind durch den Fachmann für den jeweiligen Bedarfsfall wählbar, konfigurierbar und/oder programmierbar.

Ergänzend zu der oder den Modulationen mittels der Modulationsantennen können die gesendeten Signale auch in der Sendestufe der stationären und/oder der mobilen Übertragungseinheit 1, 2 amplitudenmoduliert werden, um eine Modulationsantenne, beispielsweise für Eichzwecke, zu simulieren oder, beispielsweise bei der Verwendung von passiven Transpondern 1, um die Modulation durch die Modulationsantenne zumindest in einer Richtung zu kompensieren. Sofern die Übertragungsrichtung bereits bekannt ist, kann die Modulation in beiden Richtungen kompensiert werden, um optimale Übertragungsverhältnisse zu erzielen.

### Literaturverzeichnis

[1] Klaus Finkenzeller, RFID-Handbuch, 3. Auflage, Carl Hanser Verlag, München 2002
[2] PHILIPS, TAGSYS, Texas Instruments Inc., White Paper, ITEM-LEVEL VISIBILITY IN THE PHARMACEUTICAL SUPPLY CHAIN, White Paper, July 2004
[3] EP 1 406 207 A1
[4] EP 1 017 577 B1 = WO 99/11497
[5] US 6'046'683
[6] US 5'129'605
[7] US 6'366'260
[8] EP 1 672 560

## Patentansprüche

1. Identifikationssystem für ein Beförderungssystem, ein Verkehrsmittel oder ein Frachtfördersystem, oder für die Personenüberwachung,
mit wenigstens einer stationären und wenigstens einer entlang einem Verkehrsweg geführten mobilen Übertragungseinheit (1; 2), die mit je einer Antenne (12; 22) versehen sind,
**dadurch gekennzeichnet,**
**dass** die Übertragungseinheiten (1; 2) entlang dem Verkehrsweg derart nahe aneinander vorbei führbar sind, dass die beiden Antennen (12; 22) induktiv oder kapazitiv koppelbar sind,
**dass** wenigstens die erste der beiden Antennen (12; 22) eine Modulationsantenne (12; 22) ist, die derart ausgestaltet ist, dass bei der gegenseitigen Verschiebung der miteinander gekoppelten Antennen (12; 22) eine von der Richtung dieser Verschiebung abhängige Modulation der übertragenen Signale erfolgt,
**dass** die Modulationsantenne (12; 22) eines oder mehrere Antennensegmente aufweist, die derart ausgestaltet und zur Verschiebungsrichtung ausgerichtet sind, dass innerhalb des Kontaktbereichs der beiden Übertragungseinheiten (1; 2) unterschiedliche Kopplungsgrade der beiden Antennen (12; 22) resultieren, und
**dass** in wenigstens einer der Übertragungseinheiten (1; 2) eine mit einem Prozessor versehene Demodulationseinheit (100; 200) vorgesehen ist, die dazu ausgelegt ist, die übertragenen und richtungsabhängig modulierten Signale zu demodulieren und hinsichtlich der Bewegungsrichtung und/oder der Bewegungsgeschwindigkeit und/oder der Beschleunigung auszuwerten.

2. Identifikationssystem nach Anspruch 1, **dadurch** gekennnzeichnet, dass die wenigstens eine Antenne (12; 22) wenigstens eine Schleifenwindung (221, 222, ... ) aufweist, die eine Fläche oder einen Körper einschliesst, die bzw. der keine senkrecht zur Bewegungsrichtung verlaufende Symmetrieachse aufweist, oder dass die wenigstens eine Antenne (12; 22) derart montiert ist, dass sie keine vertikal zur Bewegungsrichtung verlaufende Symmetrieachse aufweist, oder dass die wenigstens eine Antenne (12; 22) mehrere Antennensegmente aufweist, deren Kopplungseigenschaften sich voneinander unterscheiden.

3. Identifikationssystem nach Anspruch 2, **dadurch gekennzeichnet, dass** die wenigstens eine Antenne (12; 22) mehrere Schleifenwindungen (221, 222, ... ) aufweist, von denen eine oder mehrere Schleifenwindungen (221, 222) verschiedene Flächen (A21, A22, A23) oder Körper derart einschliessen, dass in Verschieberichtung nebeneinander liegende symmetrische oder asymmetrische Flächensegmente (A21, A22, A23) oder Körpersegmente definiert sind, die von Schleifenwindungen (221; 222; 223, ...) unterschiedlicher Anzahl umschlossen sind und/oder dass die von Schleifenwindungen (223) umschlossene Antennenfläche (A) in Flächen (A21, A22, A23) aufgeteilt wird, in oder an denen Materialien (200A, 200B, ...) mit unterschiedlicher Permeabilität angeordnet sind.

4. Identifikationssystem nach Anspruch 2 oder 3, **dadurch gekennzeichnet, dass** die Fläche die Form eines Dreiecks oder eines Trapez aufweist und/oder dass die Antenne (12; 22) zur Bewegungsrichtung geneigt montiert ist und/oder dass in den Flächen (A21, A22, A23) Materialien (200A, 200B, ...) mit unterschiedlicher Permeabilität und/oder Materialien (200A, 200B, ...) mit gleicher Permeabilität und unterschiedlicher Dichte angeordnet sind.

5. Identifikationssystem nach einem der Ansprüche 1 - 4, **dadurch gekennzeichnet, dass** eines oder mehrere Antennensegmente mit fest definierten Durchmesser (d11, d12, ...) vorgesehen sind, anhand dessen bzw. anhand derer die Geschwindigkeit oder eine Beschleunigung ermittelt werden kann.

6. Identifikationssystem nach einem der Ansprüche 1 - 5, **dadurch** gekennzeichet, dass eine Kopplungsvorrichtung (4) mit einem schleifenförmigen ersten und mit einem schleifenförmigen zweiten Kopplungselement (41; 43) vorgesehen ist, die mittels wenigstens eines galvanischen oder induktiven dritten Kopplungselements (42) miteinander gekoppelt sind und von denen das erste Kopplungselement (41) induktiv mit einem Kopplungselement (12; 22) der stationären oder der mobilen Übertragungseinheit (1; 2) gekoppelt ist und von denen das zweite Kopplungselement (43) als Antenne der betreffenden stationären oder mobilen Übertragungseinheit (1; 2) und nur der Übertragung von Signalen oder der Übertragung und richtungsabhängigen Modulation von Signalen dient.

7. Verfahren für den Betrieb eines Identifikationssystems für ein Beförderungssystem, ein Verkehrsmittel oder ein Frachtfördersystem, oder für die Personenüberwachung,
mit wenigstens einer stationären und wenigstens einer entlang einem Verkehrsweg geführten mobilen Übertragungseinheit (1; 2), die mit je einer Antenne (12; 22) versehen sind,
**dadurch gekennzeichnet,**
**dass** Übertragungseinheiten (1; 2) entlang dem Verkehrsweg derart nahe aneinander vorbei geführt werden, dass die beiden Antennen (12; 22) innerhalb eines Kontaktbereichs induktiv oder kapazitiv gekoppelt werden,
**dass** wenigstens die erste der beiden Antennen (12; 22) eine Modulationsantenne (12; 22) ist, die derart ausgestaltet ist, dass bei der gegenseitigen Verschiebung der miteinander gekoppelten Antennen (12; 22) eine von der Richtung dieser Verschiebung abhängige Modulation der übertragenen Signale erfolgt,
**dass** die Modulationsantenne (12; 22) eines oder mehrere Antennensegmente aufweist, die derart ausgestaltet und zur Verschiebungsrichtung ausgerichtet sind, dass innerhalb des Kontaktbereichs der beiden Übertragungseinheiten (1; 2) unterschiedliche Kopplungsgrade der beiden Antennen (12; 22) resultierer.,
und **dass** während der gegenseitigen Verschiebung der stationären und der mobilen Übertragungseinheit (1; 2), Signale von der stationären zur mobilen Übertragungseinheit (1; 2) oder Signale von der mobilen zur stationären Übertragungseinheit (2; 1) übertragen werden, die aufgrund der innerhalb des Kontaktbereichs auftretenden unterschiedlichen Kopplungsgrade richtungsabhängig moduliert und in der empfangenden Übertragungseinheit (1; 2) demoduliert und ausgewertet werden, um die Bewegungsrichtung und/oder die Bewegungsgeschwindigkeit und/oder die Beschleunigung zu bestimmen.

8. Verfahren nach Anspruch 7, **dadurch gekennzeichnet, dass** die demodulierten Signale mit Signalmustern verglichen werden, welche für die Bewegungsrichtungen charakteristisch sind oder dass wenigstens ein fester Schwellwert (th) vorgesehen ist oder anhand der empfangenen Signale wenigstens ein variabler Schwellwert (th) gebildet wird, anhand dessen festgestellt wird, ob die erste oder zweite Signalhälfte über dem Schwellwert (th) liegt.

9. Verfahren nach Anspruch 7 oder 8, **dadurch gekennzeichnet, dass** die Modulation mittels entsprechend geformten, entsprechend installierten oder segmentierten Modulationsantennen (12; 22; 43) erfolgt.

10. Verfahren nach Anspruch 9, **dadurch gekennzeichnet, dass** eines oder mehrere Antennensegmente mit fest definiertem Durchmesser (dll; d12, ...) vorgesehen sind, für die vorzugsweise anhand von signifikanten Änderungen der Amplitude (dA1, dA2, dA3) dazu korrespondierende Intervalle (dt1; dt2; ...) in einem Signalmuster ermittelt und daraus die Geschwindigkeit und/oder die Beschleunigung ermittelt werden.

11. Verfahren nach einem der Ansprüche 7-10, **dadurch gekennzeichnet, dass** der Informationsübertragung dienende Signale oder der Energieversorgung dienende Signale demoduliert werden, um die Richtungsinformationen und/oder die Geschwindigkeitsinformationen zu ermitteln.

12. Verfahren nach einem der Ansprüche 7-11, **dadurch gekennzeichnet, dass** die Richtungsinformationen und/oder die Geschwindigkeitsinformationen in der mobilen übertragungseinheit (1) gewonnen und zur stationären Übertragungseinheit (2) übertragen werden.

13. Verfahren nach einem der Ansprüche 7-12, **dadurch gekennzeichnet, dass** nach der Ermittlung von Bewegungsinformationen der Verkehrsleitung dienende Steuervorrichtungen betätigt und/oder Signale, Meldungen oder Alarme abgegeben werden.

## Claims

1. Identification system for a transport system, a means of transportation or a freight conveyance system, or for monitor persons,
comprising at least one stationary transmission unit (1) and at least one mobile transmission unit (2) guided along a traffic route, which are each provided with an antenna (12; 22),
**characterised in**
**that** the transmission units (1; 2) can be guided along the traffic route passing one another so close, that the two antennas (12; 22) can be coupled inductively or capacitively,
**that** at least the first of the two antennas (12; 22) is a modulation antenna (12; 22), which is designed in such a way, that during the mutual translation of the antennas (12; 22), that are coupled with one another, a modulation of the transferred signals occurs, which modulation is dependent on the direction of this translation,
**that** the modulation antenna (12; 22) comprises one or more antenna segments, which are designed and aligned in respect to the direction of translation in such a way, that within the contact range of the two transmission units (1; 2) different coupling grades of the two antennas (12; 22) result, and
**that** in at least one of the transmission units (1; 2) a demodulation unit (100; 200) with a processor is provided, which is designed to demodulate and to evaluate the transferred and direction-dependently modulated signals in view of the direction of motion and/or the speed of motion and/or the acceleration.

2. Identification system according to claim 1, **characterised in that** the at least one antenna (12; 22) has at least one loop winding (221, 222, ... ) which encloses a surface or a body that has no axis of symmetry running vertically to the direction of motion, or that the at least one antenna (12; 22) is installed such that it does not have an axis of symmetry running vertically to the direction of motion, or that the at least one antenna (12; 22) has multiple antenna segments which have differing coupling properties.

3. Identification system according to claim 2, **characterised in that** the at least one antenna (12; 22) has multiple loop windings (221, 222, ... ), of which one or more loop windings (221, 222, ... ) enclose different areas (A21, A22, A23) or bodies such that symmetrical or asymmetrical surface segments (A21, A22, A23) or body segments lying adjacent in the direction of displacement are defined which are enclosed by loop windings (221; 222; 223, ...) of different numbers and/or that the antenna area (A) enclosed by loop windings (223) is divided into areas (A21, A22, A23), in or on which materials (200A, 200B, ...) of differing permeability are located.

4. Identification system according to claim 2 or 3, **characterised in that** the surface has the shape of a triangle or trapezoid, and/or that the antenna (12; 22) is installed obliquely relative to the direction of motion, and/or that in the areas (A21, A22, A23) materials (200A, 200B, ...) of different permeability and/or materials (200A, 200B, ...) of identical permeability and different density are located.

5. Identification system according to one of the claims 1 - 4, **characterised in that** one or more antenna segments are provided with fixedly defined diameters (d11, d12, ...), based on which the speed or an acceleration can be determined.

6. Identification system according to one of the claims 1 - 5, **characterised in that** a coupling device (4) is provided with a loop-shaped first and with a loop-shaped second coupling element (41; 43), which are coupled to each other by at least one conductive or inductive third coupling element (42), and of which the first coupling element (41) is inductively coupled to a coupling element (12; 22) of the stationary or the mobile transmission unit (1; 2), and of which the second coupling element (43) serves as an antenna of the given stationary or mobile transmission unit (1; 2) and serves only to effect transmission of signals, or transmission and direction-dependent modulation of signals.

7. Method for operating an identification system Identification system for a transport system, a means of transportation or a freight conveyance system, or to monitor persons,
comprising at least one stationary transmission unit (1) and at least one mobile transmission unit (2) guided along a traffic route, which are each provided with an antenna (12; 22),
**characterised in**
**that** the transmission units (1; 2) are guided along the traffic route passing one another so close, that the two antennas (12; 22) are coupled inductively or capacitively within a contact range,
**that** at least the first of the two antennas (12; 22) is a modulation antenna (12; 22), which is designed in such a way, that during the mutual translation of the antennas (12; 22), that are coupled with one another, a modulation of the transferred signals occurs, which modulation is dependent on the direction of this translation,
**that** the modulation antenna (12; 22) comprises one or more antenna segments, which are designed and aligned in respect to the direction of translation in such a way, that within the contact range of the two transmission units (1; 2) different coupling grades of the two antennas (12; 22) result, and
**that** during the mutual displacement of the stationary and the mobile transmission unit (1; 2) signals are transmitted from the stationary to the mobile transmission unit (1; 2), or signals are transmitted from the mobile to the stationary transmission unit (2; 1), which signals, because of the different coupling grades that are occuring within the contact range, are direction-dependently modulated and in the receiving transmission unit (1; 2) are demodulated and evaluated, in order to determine the direction of motion and/or the speed of motion and or the acceleration.

8. Method according to claim 7, **characterised in that** the demodulated signals are compared with signal patterns which are characteristic of the directions of motion, or that at least one fixed threshold value (th) is provided or that based on the received signals at least one variable threshold value (th) is generated that is used to determine whether the first or second signal half lies above the threshold value (th).

9. Method according to claim 7 or 8, **characterised in that** the modulation is implemented by appropriately shaped, appropriately installed or segmented modulation antennas (12; 22; 43).

10. Method according to claim 9, **characterised in that** one or more antenna segments are provided with fixedly defined diameters (d11; d12, ...) for which, preferably based on significant changes in amplitude (dA1, dA2, dA3), corresponding intervals (dt1; dt2; ...) are determined in a signal pattern, and therefrom the speed and/or acceleration are determined.

11. Method according to one of the claims 7-10, **characterised in that** signals serving for transferring information or signals serving for transferring electrical power are demodulated in order to determine the directional information and/or the speed information.

12. Method according to one of the claims 7-11, **characterised in that** the directional information and/or the speed information is obtained in the mobile transmission unit (1) and transmitted to the stationary transmission unit (2).

13. Method according to one of the claims 1-12, **characterised in that** after the determination of motion information, control devices serving for traffic management are actuated, and/or signals, messages or warnings are issued.

## Revendications

1. Système d'identification pour un système de transport, un moyen de transport ou un système de transport de fret ou pour la surveillance de personne,
avec au moins une unité de transmission stationnaire et une unité de transmission mobile au moins guidée le long d'un parcours (1; 2), lesquelles sont munies d'une antenne (12; 22),
**caractérisé en ce que**
les unités de transmission (1; 2) sont guidables le long du parcours très proches l'une de l'autre de sorte que les deux antennes (12; 22) sont couplables de manière inductive ou capacitive,
au moins la première des deux antennes (12; 22) est une antenne de modulation (12; 22) qui permet lors de la translation réciproque des antennes accouplées entre elles (12; 22), une modulation des signaux transmis dépendant de la direction de cette translation,
l'antenne de modulation (12; 22) présente un ou plusieurs segments qui sont réalisés et orientés dans le sens de translation de sorte qu'à l'intérieur d'une zone de contact des deux unités de transmission (1; 2), il en résulte des degrés de couplage différents des deux antennes (12; 22), et
dans au moins l'une des unités de transmission (1; 2), il est prévu une unité de démodulation (100; 200) munie d'un processeur qui est conçue pour démoduler les signaux transmis et modulés en fonction de la direction et de les analyser par rapport au sens de déplacement et/ou à la vitesse de déplacement et/ou de l'accélération.

2. Système d'identification selon la revendication 1, **caractérisé en ce qu'**au moins une antenne (12; 22) présente au moins une bobine de boucle (221, 222, ... ) qui englobe une surface ou un corps qui ne présente pas d'axe de symétrie vertical par rapport au sens de déplacement ou **en ce que** l'antenne (12; 22) est montée de sorte qu'elle ne présente aucun axe de symétrie vertical au sens de déplacement ou **en ce qu'**une antenne (12; 22) présente plusieurs segments d'antenne dont les propriétés de couplage sont différentes les unes des autres.

3. Système d'identification selon la revendication 2, **caractérisé en ce qu'**au moins une antenne (12; 22) présente au moins plusieurs bobines de boucle (221, 222, ... ) dont une ou plusieurs bobines de boucle (221, 222) englobent différentes surfaces (A21, A22. A23) ou des corps de sorte que des segments de surface asymétriques ou symétriques se trouvant les uns à côté des autres dans le sens de translation sont définies, lesquels sont entourés par des bobines de boucle (221; 222; 223, ...) de nombres différents et/ou **en ce que** la surface d'antenne (A) entourée par des bobines de boucle (223) est divisée en surfaces (A21, A22, A23) dans ou sur les matériaux (200A, 200B,...) desquelles sont disposés avec des perméabilités différentes.

4. Système d'identification selon la revendication 2 ou 3, **caractérisé en ce que** la surface présente la forme d'un triangle ou d'un trapèze et/ou que l'antenne (12; 22) est montée inclinée dans la direction de déplacement et/ou que dans les surfaces (A21, A22, A23) sont disposés des matériaux (200A, 200B, ...) de perméabilité différente et/ou des matériaux (200A, 200B, ...) de perméabilité identique et de densité différente.

5. Système d'identification selon l'une des revendications 1 à 4, **caractérisé en ce qu'**un ou plusieurs segments d'antenne avec des diamètres (d11, d12, ...) définis fixement sont prévus permettant de déterminer la vitesse ou une accélération.

6. Système d'identification selon l'une des revendications 1 à 5, **caractérisé en ce qu'**il est prévu un dispositif de couplage (4) avec un premier élément de couplage en forme de boucle et un second élément de couplage en forme de boucle (41; 43) qui sont accouplés entre eux au moyen d'au moins un troisième élément de couplage (42) galvanique ou inductif et dont le premier élément de couplage (41) est couplé inductivement à un élément de couplage (12; 22) de l'unité de transmission stationnaire ou de l'unité de transmission mobile (1; 2) et dont le second élément de couplage (43) sert d'antenne de l'unité de transmission concernée stationnaire ou mobile (1; 2) et uniquement pour la transmission de signaux ou que pour la transmission et la modulation de signaux dépendant de la direction.

7. Procédé pour le fonctionnement d'un système d'identification pour un système de transport, un moyen de transport ou un système de transport de fret ou pour la surveillance de personne,
avec au moins une unité de transmission stationnaire et une unité de transmission mobile et au moins guidée le long d'un parcours (1; 2), lesquelles sont munies d'une antenne (12; 22),
**caractérisé en ce que**
les unités de transmission (1; 2) sont guidables le long du parcours très proches l'une de l'autre de sorte que les deux antennes (12; 22) sont couplables de manière inductive ou capacitive à l'intérieur d'une zone de contact,
au moins la première des deux antennes (12; 22) est une antenne de modulation (12; 22) qui lors de la translation réciproque des antennes accouplées entre elles (12; 22), il se produit une modulation des signaux transmis dépendant de la direction de cette translation,
l'antenne de modulation (12; 22) présente un ou plusieurs segments qui sont réalisés et orientés dans le sens de translation de sorte qu'à l'intérieur d'une zone de contact des deux unités de transmission (1; 2), il en résulte des degrés de couplage différents des deux antennes (12; 22),
et **en ce que** pendant la translation réciproque des unités de transmission stationnaires et mobiles (1; 2), des signaux sont transmis de la unité de transmission stationnaire par la unité de transmission mobile (1; 2) ou des signaux sont transmis de la unité de transmission mobile par la unité de transmission stationnaire (2; 1), qui en raison des degrés de couplage différents survenant à l'intérieur des zone de contact sont modulés en fonction de la direction et démodulés et analysés dans l'unité de transmission réceptrice (1; 2) pour définir le sens de mouvement et/ou la vitesse de déplacement et/ou l'accélération.

8. Procédé selon la revendication 7, **caractérisé en ce que** les signaux démodulés sont comparés avec des modèles de signaux qui sont caractéristiques des directions de déplacement ou **en ce qu'**il est prévu au moins une valeur seuil (th) fixé ou à l'aide des signaux reçus, il est formé au moins une valeur seuil variable (th) à l'aide de laquelle il est déterminé si la première ou la seconde moitié de signaux se trouve au-dessus de la valeur seuil (th).

9. Procédé selon la revendication 7 ou 8, **caractérisé en ce que** la modulation s'effectue au moyen d'antennes de modulation (12; 22; 43) segmentées ou installées et moulés en conséquence.

10. Procédé selon la revendication 9, **caractérisé en ce qu'**un ou plusieurs segments d'antenne sont prévus avec des diamètres (d11, d12, ...) définies fixement pour lesquels de préférence à l'aide de modifications significatives de l'amplitude (dA1, dA2, dA3), des intervalles correspondants (dt1; dt2; ...) sont déterminés dans un modèle de signal et la vitesse et/ou l'accélération en est déterminée.

11. Procédé selon l'une des revendications 7 à 10, **caractérisé en ce que** les signaux servant à la transmission d'information ou les signaux servant à l'alimentation d'énergie sont démodulés pour déterminer les informations de direction et/ou les informations de vitesse.

12. Procédé selon l'une des revendications 7 à 11, **caractérisé en ce que** les informations de direction et/ou les informations de vitesse sont récupérées dans l'unité de transmission mobile (1) et sont transmises à l'unité de transmission stationnaire (2).

13. Procédé selon l'une des revendications 7 à 12, **caractérisé en ce qu'**après la détermination d'informations de déplacement des dispositifs de commande servant au pilotage du trafic sont activés et/ou des signaux, messages ou alarmes sont émis.
